(19) Europäisches Patentamt
European Patent Office
Office européen des brevets

(11) Veröffentlichungsnummer: **0 043 801**
**B1**

(12) # EUROPÄISCHE PATENTSCHRIFT

(45) Veröffentlichungstag der Patentschrift: **06.06.84**

(21) Anmeldenummer: **81810269.1**

(22) Anmeldetag: **03.07.81**

(51) Int. Cl.³: **C 07 F 9/30,** C 07 F 9/34, C 07 F 9/32, C 07 F 9/36, A 01 N 57/22, A 01 N 57/30, A 01 N 57/34

(54) **Neue 2-substituierte 5-Phenoxy-phenylphosphinsäurederivate mit herbizider Wirksamkeit, Verfahren zur Herstellung derselben, sie enthaltende herbizide Mittel und Verwendung der neuen Wirkstoffe und Mittel.**

(30) Priorität: **09.07.80 CH 5251/80**

(43) Veröffentlichungstag der Anmeldung: **13.01.82 Patentblatt 82/2**

(45) Bekanntmachung des Hinweises auf die Patenterteilung: **06.06.84 Patentblatt 84/23**

(84) Benannte Vertragsstaaten: **BE CH DE FR GB LI NL**

(56) Entgegenhaltungen:
**EP - A - 0 014 684**
**DE - A - 2 619 841**
**US - A - 3 408 390**
**US - A - 3 576 861**
**US - A - 4 130 410**

(73) Patentinhaber: **CIBA-GEIGY AG, Postfach, CH-4002 Basel (CH)**

(72) Erfinder: **Maier, Ludwig, Dr., Im Lee 28, CH-4144 Arlesheim (CH)**

**EP 0 043 801 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Vorliegende Erfindung betrifft neue, das Pflanzenwachstum beeinflussende, insbesondere herbizid wirksame 2-substituierte 5-Phenoxyphenylphosphinsäurederivate, Verfahren zu ihrer Herstellung,ferner das Pflanzenwachstum beeinflussende (insbesondere herbizide) Mittel, die diese neuen Phosphinsäurederivate als Wirkstoffe enthalten, sowie die Verwendung der neuen Wirkstoffe und der sie enthaltenden Mittel zur selektiven oder totalen Bekämpfung von Unkräutern und zur Regulierung des Pflanzenwachstums.

In der deutschen Offenlegungsschrift 2 619 841 sind chlorierte und unchlorierte 2-Nitro-phenylphosphonsäuren, deren Natriumsalze und Äthylester als Wirkstoffe für Mittel zur Regulierung des Pflanzenwachstums vorgeschlagen worden. Ein Teil der Wirkstoffe dieser DE-OS 2 619 841 waren schon aus früheren Literaturstellen, wie »Chemical Communications« 1966, 491; J. Chem. Soc. (o) 1969, 1314 und Tetrahedron Letters 1967 (21), 1987-89 bekannt, die freie 2-Nitro-phenylphosphonsäure auch als bakterizid wirksam erkannt.

Aus der Reihe der Phenoxy-phenylphosphonsäuren sind 3-substituierte 4-Phenoxyphenylphosphonsäuren, welche in p-Position des Phenoxyrestes noch weiter substituiert sein können, ohne irgendeine Wirkungsangabe beschrieben worden in: »Organic Phosphorus Compounds«, eds. G. M. Kopolapoff and L. Maier, John Wiley & Sons, Inc., New York, 1976, Vol. 7, Seiten 226—227.

Herbizid wirksame 2-substituierte 5-Phenoxy-phenylphosphonsäuren und deren Derivate bilden den Gegenstand der Europäischen Patentpublikation 14 684.

Aus der Reihe der Phosphinsäuren sind aus der US-PS 4 130 410 herbizide Aryl-alkylphosphinsäuren, wie die Methyl-(2-methoxyphenyl)-phosphinsäure bekanntgeworden.

Die Bis(phenoxy-phenyl)phosphinsäure ist in J. Med. Chem. 8, 891 (1965) ohne Angabe herbizider Eigenschaften beschrieben.

Die Wirkstoffe vorliegender Erfindung, nämlich 2-substituierte 5-Phenoxy-phenyl-phosphinsäuren und deren Derivate sind jedoch neue Verbindungen, und es wurde gefunden, daß diese neuen Wirkstoffe ausgezeichnete, insbesondere selektiv-herbizide sowie pflanzenwachstumsregulierende, aber auch fungizide und zum Teil bakterizide Eigenschaften besitzen.

Die neuen 2-substituierten 5-Phenoxy-phenylphosphinsäurederivate vorliegender Erfindung entsprechen der Formel I

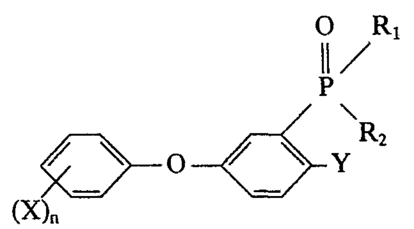

(I)

worin $R_1$ einen gegebenenfalls substituierten Alkyl- oder einen Arylrest, $R_2$ eine Hydroxylgruppe (OH), nieder Alkoxy, nieder Alkylthio, Alkylamino, Dialkylamino oder Chlor, X Halogen oder eine Gruppe $-CF_3$, $-NO_2$ oder $-CN$, n eine Zahl von Null bis 3, und Y $-NO_2$, $-NH_2$, $-OH$, Halogen oder $-CN$ darstellt.

Alkylreste $R_1$ sind vorzugsweise niedere $C_1-C_4$-Alkylreste, wie Methyl-, Äthyl, n- und i-Propyl und die vier möglichen Butylreste; diese Alkylreste können auch, insbesondere durch Halogen wie Chlor substituiert sein, z. B. seien folgende Reste genannt: $-CCl_3$, $Cl-CH_2-$ und $Cl-CH_2-CH_2-$. Unter Arylrest $R_1$ sei Phenyl besonders hervorgehoben.

Alkoxy-, Alkylthio- und (Di)-Alkylaminogruppen $R_2$ weisen 1 bis 4 C-Atome im Alkylteil auf.

Halogenatome X und Y sind Chlor, Brom oder Jod, vorzugsweise Chlor.

Der bevorzugte Rest Y ist die Nitrogruppe.

Besonders interessant und bevorzugt als herbizide Wirkstoffe sind Verbindungen, in denen n = 2 ist und die beiden Reste X (als $X_1$ und $X_2$) in ortho- und para-Stellung des Phenoxyrests stehen und die beiden X unabhängig voneinander je durch $NO_2$, CH, $CF_3$ und Halogen, insbesondere Chlor verkörpert sind.

Ganz besonderes Interesse haben 2-substituierte 5-(2'-Halogen-4'-trifluormethyl-phenoxy)-phenylphosphinsäurederivate der Formel

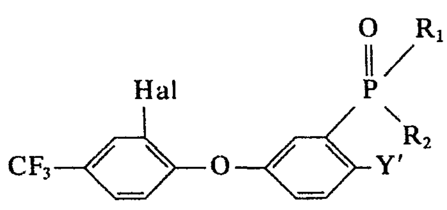

(IV)

worin Hal ein Halogenatom, insbesondere Chlor und Y' ein Halogenatom, die Cyano- und insbesonde-

re die Nitrogruppe bedeuten.

Die Herstellung der neuen Phosphinsäurederivate der Formel I erfolgt in Analogie zur bekannten Herstellung von 2-Nitrophenylphosphonsäuren (J. Chem. Soc. (C), 1969, 1314), indem man ein 1,2-Dinitro-5-phenoxy-benzol (3,4-Dinitro-diphenyläther) der Formel II

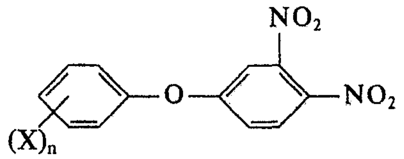

(II)

mit einem O,O-Dialkyl-alkyl-oder aryl-phosphonit $R_1-P(OR')_2$ worin R′ niedere Alkylreste und $R_1$ gegebenenfalls substituiertes Alkyl oder Aryl bedeuten, unter Abspaltung eines Moles einer Verbindung $R'-O-N-O$ in einen Alkylester einer 2-Nitro-5-Phenoxy-phenylphosphinsäure der Formel III

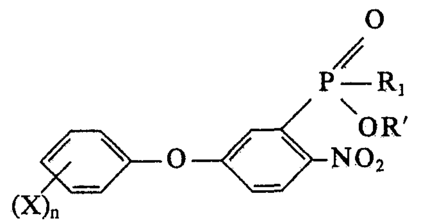

(III)

überführt, und gewünschtenfalls diesen Phosphinsäure-alkylester-Rest in an sich bekannter Weise in die entsprechende freie Phosphinsäure oder in ein anderes erfindungsgemäßes Derivat dieser Säure gemäß der Definition $R_2$ in der Formel I überführt. Gewünschtenfalls kann auch die verbleibende 2-ständige Nitrogruppe durch einen anderen Rest Y ersetzt werden.

Bei obiger Umsetzung, welche bei Temperaturen zwischen 50° und 150° C, vorzugsweise zwischen 70° und 120° C durchgeführt wird, entsteht unter Abspaltung eines Mols $R'-O-N=O$ aus der zur Phenoxygruppe metaständigen Nitrogruppe die meta-ständige Phosphinsäureestergruppe, während die zur Phenoxygruppe para-ständige Nitrogruppe erhalten bleibt. Dies geht aus spektroskopischen Daten klar hervor. Die Umsetzung mit dem genannten Phosphonit kann ohne Anwesenheit eines Lösungsmittels, vorzugsweise jedoch in einem organischen aprotischen Lösungsmittel, wie Acetonnitril, Benzol, Toluol etc. durchgeführt werden.

Die Herstellung der Ausgangsstoffe der Formel II erfolgt entsprechend den Ausführungen der Europäischen Patentpublikation 0 007 471 nach folgendem Reaktionsschema:

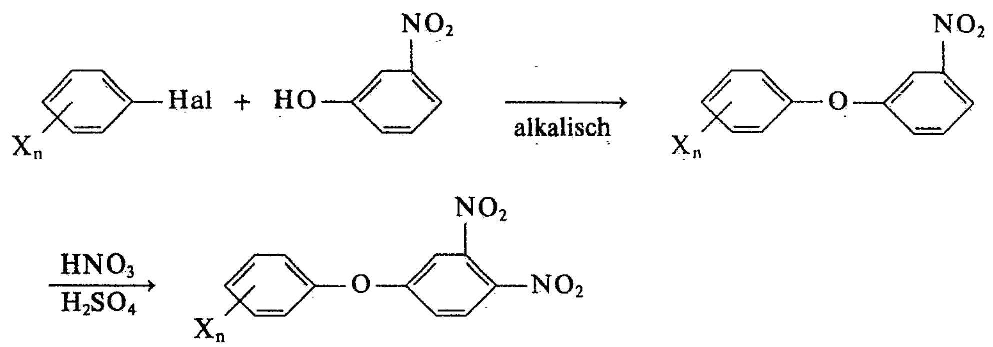


also durch Nitrierung eines 3-Nitrodiphenyläthers, welcher aus einem Halogenbenzol und 3-Nitrophenol hergestellt wurde.

Die in 2-Stellung des Produktes der Formel III befindliche Nitrogruppe ($Y = NO_2$) kann gewünschtenfalls in eine andere Gruppe Y umgewandelt werden. Mit Wasserstoff läßt sie sich katalytisch (Ni- oder Pd-Katalysatoren) zur Aminogruppe ($-NH_2$) reduzieren.

Zum Austausch der Aminogruppe durch Halogen oder Cyan wird diese mit Natriumnitrit sauer diazotiert und das Diazoniumsalz in bekannter Weise verkocht oder nach Sandmeyer mit CuCN oder einem Kupferhalogenid (CuJ) umgesetzt, wobei Derivate entstehen, in denen Y Halogen, die Cyanogruppe oder die Hydroxylgruppe darstellt.

Die Phosphinat-Estergruppe läßt sich durch Behandeln mit 2 Mol $SOCl_2$ in Gegenwart von Dimethylformamid als Katalysator bei erhöhter Temperatur (US-Patent 4 213 922) leicht in das Phosphinsäurechlorid umwandeln ($R_2 = Cl$). Durch Umsetzung diese Chlorids mit primären oder skundären Alkylaminen, Alkoholen, Mercaptanen oder Wasser läßt sich das Chloratom ersetzen, und zwar durch einen Rest aus den Gruppen Alkylamino, Dialkylamino, Alkoxy, Alkylthio oder Hydroxyl.

Die freien Phosphinsäuren ($R_2 = OH$) erhält man auch direkt aus den Alkylestern durch Behandeln

mit konz. Salzsäure oder $(CH_3)_3SiBr$ und anschließende Hydrolyse der Silylester mit Wasser.

Sowohl die Ester wie auch die freien Säuren und ihre Derivate der Formal I zeigen eine ausgezeichnete herbizide Wirkung, und zwar sowohl bei pre- als auch bei post-emergenter Anwendung.

Die nachfolgenden Beispiele veranschaulichen die Herstellung einiger erfindungsgemäßer 2-substituierter 5-Phenoxy-phenylphosphinsäurederivate der Formel I. Weitere in entsprechender Weise hergestellte Wirkstoffe der Formel I sind in der anschließenden Tabelle aufgeführt. Temperaturangaben beziehen sich jeweils auf Celsius-Grade.

## Beispiel 1

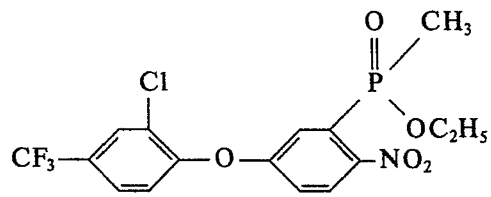

Eine Mischung aus 30,9 g (0,085 Mol) 3,4-Dinitro-2'-chlor-4'-trifluormethyl-diphenyläther 23,2 g (0,170 Mol) $CH_3P(OC_2H_5)_2$ (O,O-Diäthyl-methylphosphonit) in 200 ml Toluol wird 20 Std. zum Rückfluß erhitzt. Dann wird am Rotavap eingedampft und der dunkelbraune, harzige Rückstand über Silicagel KG 60 chromatographiert (Lösungsmittel: Äthylacetat: Hexan = 4 : 1). Man erhält 22 g oranges Öl, das nach Umkristallisieren aus Diisopropyläther 20,3 g hellgelbe Kristalle ergibt, die nach nochmaligem Umkristallisieren 18,6 g (= 51,6%) 2-Nitro-5-(2'-chlor-4'-trifluormethyl-phenoxy)-phenyl-methylphosphinsäure-äthylester obiger Formel vom Fp. 106—107° ergeben.

$^1H$—NMR (in $CDCl^3$) in $\delta$:

C—$CH_3$ 1,20 (t, 3H), P—$CH_3$ 1,93 (d, $J_{PCH}$16 Hz, 3H);
$OCH_2$ 4,0 (quin, 2H);
aromt.H 7—8,2 (m, 6H).

Analyse: $C_{16}H_{14}ClF_3NO_5P$ (423,71)
Ber. C 45,36; H 3,33; N 3,31 F 13,45%;
gef. C 45,54; H 3,39; N 3,55; F 13,21%.

## Beispiel 2

Eine Mischung aus 7 g des nach Beispiel 1 erhaltenen Esters, 20 ml 20%iger wässeriger HCl und 20 ml Äthanol wird 20 Std. zum Rückfluß erhitzt und dann am Rotavap eingedampft. Man erhält 6,2 g (= 98,6%) der entsprechenden freien Phosphinsäure als glasige in Wasser lösliche Substanz.

$^1H$—NMR (in DMSO—$CD_3OD$) in $\delta$:
P—$CH_3$ 1,33 (d; $J_{PCH}$ 15 Hz, 3H);
aromat.H 6,4—7,7 (m, 6H);
OH 4,03 (s, 1H).

## Beispiel 3

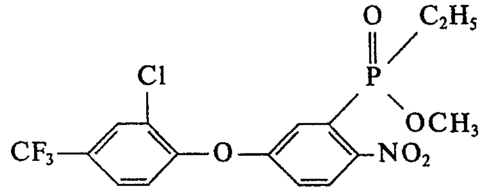

[2-Nitro-5-(2'-chlor-4'-triflouor-methyl-phenoxy)-phenyl-äthylphosphinsäure-methylester].

Eine Mischung aus 36,26 g (100 mMol) 3,4-Dinitro-2'-chlor-4'-trifluormethyl-diphenyläther und 24,42 g (200 mMol) 0,0-Dimethyl-äthylphosphonit [$C_2H_5P(OCH_3)_2$] wurde in 250 ml Toluol unter Normaldruck 24 Stunden zum Rückfluß erhitzt. Dann wurde das Lösungsmittel unter reduziertem Druck abgedampft und der Rückstand im Kugelrohrofen im Hochvakuum bei 180°C destilliert. Das Destillat kristallisierte in der Vorlage und schmolz nach der Umkristallisation aus Diisopropyläther bei 61—63°;

Ausbeute 13,1 g (= 30,9%)

$^1H-NMR$ in $CDCl_3$ in $\delta$:
$C-CH_3$ 1,03 ($J_{POCH}$ 21 Hz,3H);
$CH_2-C$ 2,2 ($J_{PCH}$ 15 Hz,2H)
$OCH_3$ 3,55 ($J_{POCH}$ 11 Hz,3H);
aromat.H 7—8,0 (m, 6H) [ppm].

Analyse: $C_{16}H_{14}ClF_3NO_5P$ (423,71)
Ber. C 45,36; H 3,33; N 3,31; F 13,45; Cl 8,37%;
gef. C 45,59; H 3,38; N 3,35; F 13,61; Cl 8,14%.

## Beispiel 4

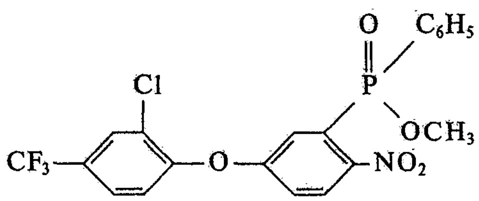

[2-Nitro-5-(2'chlor-4'-trifluor-methyl-phenoxy)-phenyl-phenyl-phosphinsäure-methylester]

Eine Mischung aus 36,26 g (100 mMol) 3,4-Dinitro-2'-chlor-4'-trifluormethyl-diphenyläther und 34,03 g (200 mMol) O,O-Dimethyl-phenylphosphonit [$C_6H_5P(OCH_3)_2$] wurde in 250 ml Toluol 4 Stunden unter Stickstoffatmosphäre zum Rückfluß erhitzt. Dann wurde das Lösungsmittel unter reduziertem Druck abgedampft und der Rückstand über Kieselgel 60 mit Äthylacetat: Hexan = 4 : 1 chromatographiert. Es wurden 25,3 g (= 53,6% d. Th.) hellbeige Kristalle, die nach der Umkristallisation aus Diisopropyläther bei 111—112° schmolzen, erhalten.

Analyse: $C_{20}H_{14}ClF_3NO_5P$ (471,76)
Ber. C 50,92; H 2,99; N 2,97; F 12,08; Cl 7,51%;
gef. C 50,83; H 3,02; N 3,02; F 12,28; Cl 7,54%;

$^1H-NMR$ in $CDCl_3$ in $\delta$:
$OCH_3$ 3,65 (d, $J_{POCH}$ 11 Hz, 3H);
$P-C_6H_5$ u.
aromat.H 7—8,0 (m, 11H) [ppm].

## Beispiel 5

2-Nitro-5-(2'-chlor-4'trifluormethyl-phenoxy)-phenyl-methyl-phosphinsäure-methylester

Eine Mischung von 60,0 g 3,4-Dinitro-2'-chlor-4'-trifluormethyl-diphenyläther und 35,8 g O,O-Dimethyl-methyl-phosphonit [$CH_3-P(OCH_3)_2$] wird in 400 ml Toluol 16 Stunden unter Rühren zum Rückfluß erhitzt, wobei $CH_3-O-NO$ als Gas entweicht.

Dann wird das Reaktionsgemisch als Rotovapor eingedampft und der Rückstand mit Diisopropyläther versetzt. Beim Rühren tritt Kristallisation ein. Die Kristalle werden Äthylacetat gelöst und über 300 g Kieselgel 60 filtriert, eingeengt und wieder aus Diisopropyläther umkristallisiert. Man erhält 34,0 g hellgelbe Kristalle (50,1% d. Th.) vom Fp. 123—124°C.

$^{31}P$-chem. Verschiebung (in $CDCl_3$) —40,0 ppm
$^1H$ (in $CDCl_3$) in $\delta$:
$CH_3-P$ 2,03 ppm (d, $J_{PCH}$16 Hz, 3H);
$OCH_3$ 3,8 ppm (d, $J_{POCH}$11,6 Hz, 3H);
aromat.H 7,9—8,3 ppm (m, 6H).

Analyse: $C_{15}H_{12}ClF_3NO_5P$ (409,7)
Ber. C 43,98; H 2,95; N 3,42; Cl 8,65; F 13,91; P 7,56%;
gef. C 43,93; H 2,99; N 3,39; Cl 8,83; F 14,18; P 7,63%.

## Beispiel 6

### 2-Nitro-5-(2′-chlor-4′-trifluormethyl-phenoxy)-phenyl-methyl-phosphinsäure-n-butylester

36,3 g (0,1 Mol) 3,4-Dinitro-2′-chlor-4′-trifluormethyl-diphenyläther werden in 200 ml Toluol gelöst und zum Rückfluß erhitzt. Dann wird in die siedende Lösung innert 1/2 Stunde 21,15 g (0,11 Mol) O,O-Di-n-butylmethyl-phosphonit [$CH_3-P(OC_4H_9)_2$] zugetropft und unter Rühren 16 Stunden weiter bei Rückfluß erhitzt. Nach Aufarbeiten durch Chromatographie an einer Kieselgel-Säule mit Äthylacetat (100%) ergibt die zweite Fraktion (2 Liter) nach Eindampfen ein oranges Öl, das aus Diisopropyläther kristallisiert. Man erhält 10,8 g (24%) beige Kristalle von Fp. 45—46° C.

$^1H$—NMR (in $CDCl_3$) in $\delta$:
$P-CH_3 + C_3H_7$ 0,8—2,2 (m, 10H);
$OCH_3$ 3,9 (m, 2H);
aromat.H 7—8,2 (m, 6H) [ppm].

Analyse: $C_{18}H_{18}ClF_3NO_5P$ (451,8).
Ber. C 47,85; H 4,02; N 3,1; Cl 7,85; F 12,61; P 6,86%;
gef. C 48,3; H 4,3; N 3,0; Cl 7,6; F 12,2; P 6,7%.

In der folgenden Tabelle sind diese und weitere in analoger Weise hergestellte Verbindungen der Formel

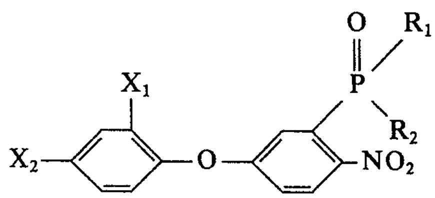

zusammengestellt:

| Verb. Nr. | $X_1$ | $X_2$ | $R_1$ | $R_2$ | physikal. Konstanten |
|---|---|---|---|---|---|
| 1 | Cl | $CF_3$ | $CH_3$ | $-OC_2H_5$ | Fp. 106—107° C |
| 2 | Cl | $CF_3$ | $CH_3$ | $-OH$ | glasig, wasserlöslich |
| 3 | Cl | $CF_3$ | $C_2H_5$ | $-OCH_3$ | Fp. 61—63° C |
| 4 | Cl | $CF_3$ | Phenyl | $-OCH_3$ | Fp. 111—112° C |
| 5 | Cl | $CF_3$ | $CH_3$ | $-OCH_3$ | Fp. 123—124° C |
| 6 | Cl | $CF_3$ | $CH_3$ | $-O-C_4H_9(n)$ | Fp. 45—46° C |
| 7 | $NO_2$ | $CF_3$ | $CH_3$ | $-OC_2H_5$ | |
| 8 | $NO_2$ | Cl | $C_2H_5$ | $-OCH_3$ | |
| 9 | $NO_2$ | $CF_3$ | $CH_3$ | OH | |
| 10 | CN | $CF_3$ | $CH_3$ | $-OC_2H_5$ | |
| 11 | $CF_3$ | $NO_2$ | Phenyl | $-OC_3H_7(n)$ | |
| 12 | $NO_2$ | Cl | $-CCl_3$ | $-OCH_3$ | |
| 13 | Cl | $CF_3$ | $(-CH_2)_2-Cl$ | $-OC_2H_5$ | |
| 14 | $CF_3$ | CN | $-CH_2Cl$ | $-OC_4H_9$ | |

Fortsetzung

| Verb. Nr. | $X_1$ | $X_2$ | $R_1$ | $R_2$ | physikal. Konstanten |
|---|---|---|---|---|---|
| 15 | $CF_3$ | $NO_2$ | Phenyl | $-OH$ | |
| 16 | Cl | $CF_3$ | $C_2H_5$ | $-OC_3H_7$(iso) | |
| 17 | Cl | $CF_3$ | $C_2H_5$ | $-OC_4H_9$(tert.) | |

Weitere ausgewählte Wirkstoffe der Formel

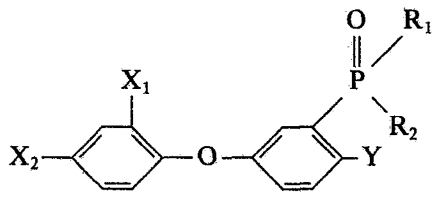

sind in folgender Tabelle zusammengestellt:

| Verb. Nr. | $X_1$ | $X_2$ | $R_1$ | $R_2$ | Y |
|---|---|---|---|---|---|
| 18 | Cl | $CF_3$ | $CH_3$ | $-OC_2H_5$ | $NH_2$ |
| 19 | Cl | $CF_3$ | $C_2H_5$ | $-OCH_3$ | $NH_2$ |
| 20 | Cl | $CF_3$ | $CH_3$ | $-OCH_3$ | OH |
| 21 | Cl | $CF_3$ | $C_2H_5$ | $-OCH_3$ | OH |
| 22 | Cl | $CF_3$ | $CH_3$ | $-OC_2H_5$ | Cl |
| 23 | Cl | $CF_3$ | $C_2H_5$ | $-OCH_3$ | Cl |
| 24 | Cl | $CF_3$ | $CH_3$ | $-OC_4H_9$(n) | Br |
| 25 | Cl | $CF_3$ | $CH_3$ | $-OCH_3$ | Br |
| 26 | Cl | $CF_3$ | $CH_3$ | $-OC_3H_7$ | J |
| 27 | Cl | $CF_3$ | Phenyl | $-OCH_3$ | CN |
| 28 | Cl | $CF_3$ | $CH_3$ | $-OC_2H_5$ | CN |
| 29 | Cl | $CF_3$ | $CH_3$ | Cl | $NO_2$ |
| 30 | Cl | $CF_3$ | n-$C_3H_7$ | $-OCH_3$ | $NO_2$ |
| 31 | Cl | $CF_3$ | t-$C_4H_9$ | $-OCH_3$ | $NO_2$ |

Die neuen Phosphinsäurederivate der Formel I sind unterhalb 160° stabile Verbindungen, welche in üblichen organischen Lösungsmitteln löslich sind.

Zur Verwendung als Herbizide oder Pflanzenwachstumsregulatoren können die neuen Wirkstoffe für sich allein, vorzugsweise jedoch zusammen mit geeigneten Trägerstoffen und/oder anderen Zuschlagstoffen in Form sogenannter Mittel verwendet werden.

Besonders im Vordergrund steht die Verwendung als pre- und post-emergentes Herbizid, wobei manche Wirkstoffe transloziert werden und enige gute selektive Eigenschaften haben. Als Pflanzenregulatoren wirken die Wirkstoffe bei niederen Aufwandmengen insbesondere im Sinne von Wachstumshemmern für mono- und dicotyle Pflanzen, sowie zur Desiccation oberirdischer Pflanzenteile.

Solche Wirkstoffe der Formel I, welche eher geringe Selektivität zeigen, eignen sich dafür aber ausgezeichnet als post-emergente »knock-down«-Mittel zur raschen und totalen Vernichtung und

Abbrennung (Desiccation) unerwünschter oder zu ersetzender Pflanzendecken und Pflanzenbestände am Boden.

Ein solches Einsatzgebiet ist beispielsweise die Vernichtung von Convolvulus-Arten in Rebbergen, wo z. B. die Verbindung Nr. 1 der Tabelle mit 2 kg/ha einen guten Effekt ergibt.

Ein noch wichtigeres Einsatzgebiet, welches sich durch die rasche und totale Kontaktwirkung einiger der neuen Wirkstoffe wie z. B. Nr. 1 und 3 erschließt, ist die Totalerneuerung einer abgeernteten Anbaufläche oder eine Weide durch rasche Vernichtung (Abbrand) der gesamten Flora und Neueinsaat einer anderen Kultur ohne vorhergehendes Umpflügen.

Nach diesem »no tillage« System (pflugloser Ackerbau) wird vor der Neu-Einsaat nicht mehr gepflügt. Statt durch den Pflug werden die Unkrautdecke oder die Pflanzenrestbestände einer vorherigen abgeernteten Getreidekultur (Stoppeln) durch rasch wirkende Herbizide in wenigen Tagen (bis höchstens 2 Wochen) total vernichtet (Abbrand). In die so abgetrocknete Pflanzendecke wird eine neue Kultur dann mit speziellen Sämaschinen in Reihen eingesät.

Dieses Verfahren drängt sich auf in durch Wind und Wasser erosionsgefährdeten Gebieten, ferner wo der Aufwand an Maschinen, Energie und Arbeit reduziert werden soll und insbesondere in Gebieten, wo nach der Ernte einer ersten Kultur die Folgekultur rasch eingebracht werden muß, wie in einer Fruchtfolge:

Weizen → Soja oder Mais oder Baumwolle,
Gras → Soja oder Mais oder Baumwolle

(Weide oder Kunstwiese)

Soja-Stoppeln → Mais
Mais-Stoppeln → Soja

Meist wird nicht nur ein Herbizid allein, sondern eine Mischung von 3 Herbiziden angewendet. Eine der Komponenten ist dabei immer ein schnell wirksames Herbizid; dazu diente bisher in erster Linie Paraquat, dem z. B. Atrazin oder ein Acetanilid zugemischt wird.

Einige Wirkstoffe vorliegender Erfindung, wie z. B. Verbindungen Nr. 1 und 3 besitzen Eigenschaften, die sie befähigen, im oben zitierten pfluglosen Ackerbau (no tillage system) die Rolle des Paraquat (1,1-Dimethyl-4,4-bipyridylium-dichlorid) zu übernehmen, ohne dessen Nachteil (toxische Wirkung auf Warmblüter) in gleichem Maße aufzuweisen.

Die Herstellung erfindungsgemäßer Mittel erfolgt in an sich bekannter Weise durch inniges Vermischen und Vermahlen von Wirkstoffen der allgemeinen Formel I mit geeigneten Trägerstoffen und/oder Verteilungsmitteln, gegebenenfalls unter Zusatz von gegenüber den Wirkstoffen inerten Antischaum-, Netz-, Dispersions- und/oder Lösungsmitteln. Die Wirkstoffe können in den folgenden Aufarbeitungsformen vorliegen und angewendet werden:

Feste Aufarbeitungsformen:
Stäubemittel, Streumittel, Granulate, Umhüllungsgranulate, Imprägniergranulate und Homogengranulate;
in Wasser dispergierbare Wirkstoffkonzentrate:
Spritzpulver (wettable powder), Pasten, Emulsionen; Emulsionskonzentrate;
flüssige Aufarbeitungsformen:
Lösungen.

Die Wirkstoffkonzentrationen betragen in den handelsüblichen erfindungsgemäßen Mitteln 1 bis 80 Gewichtsprozent und können vor der Anwendung auf niedrigere Konzentrationen von etwa 0,05 bis 1% verdünnt werden.

Den beschriebenen erfindungsgemäßen Mitteln lassen sich andere biozide Wirkstoffe beimischen. So können die neuen Mittel außer den genannten Verbindungen der allgemeinen Formel I z. B. Isektizide, Fungizide, Bakterizide, Fungistatika, Bakteriostatika, Nematozide oder weitere Herbizide zur Verbreiterung des Wirkungsspektrums enthalten.

Die Herstellung erfindungsgemäßer Mittel sei durch Beispiele zur Herstellung fester und flüssiger Aufbereitungsformen näher erläutert.

Granulat

Zur Herstellung eines 5%igen Granulates werden die folgenden Stoffe verwendet:

| | |
|---|---|
| 5 Teile | des Wirkstoffs Nr. 1 [2-Nitro-5-(2'-chlor-4'-trifluormethyl-phenoxy)-phenyl-methyl-phosphinsäure-äthylester] |
| 0,25 Teile | epoxidiertes Pflanzenöl, |
| 0,25 Teile | Cetylpolyglykoläther, |
| 3,50 Teile | Polyäthylglykol, |
| 91 Teile | Kaolin (Korngröße: 0,3 – 0,8 mm) |

Die Aktivsubstanz wird mit dem epoxidierten Pflanzenöl vermischt und in 6 Teilen Aceton gelöst, hierauf wird Polyäthylenglykol und Cetylpolyglykoläther zugesetzt. Die so erhaltene Lösung wird auf Kaolin aufgesprüht und anschließend im Vakuum verdampft.

Spritzpulver

Zur Herstellung eines a) 70%igen und b) 10%igen Spritzpulvers werden folgende Bestandteile verwendet:

| | | |
|---|---|---|
| a) | 70 Teile | 2-Nitro-5-(2'-chlor-4'-trifluormethyl-phenoxy)-phenyl-äthyl-phosphinsäuremethylester (Verb. Nr. 3). |
| | 5 Teile | Natriumdibutylnapthylsulfonat, |
| | 3 Teile | Naphthalinsulfonsäuren-Phenolsulfonsäuren-Formaldehyd-Kondensat 3 : 2 : 1, |
| | 10 Teile | Kaolin, |
| | 12 Teile | Champagne-Kreide; |
| b) | 10 Teile | 2-Nitro-5-(2'-chlor-4'-trifluormethyl-phenoxy)-phenyl-methyl-phosphinsäure, (Verb. Nr. 2) |
| | 3 Teile | Gemisch der Natriumsalze von gesättigten Fettalkoholsulfaten, |
| | 5 Teile | Naphthalinsulfonsäuren-Formaldehyd-Kondensat, |
| | 82 Teile | Kaolin. |

Der angegebene Wirkstoff wird auf die entsprechenden Trägerstoffe (Kaolin und Kreide) aufgezogen und anschließend vermischt und vermahlen. Man erhält Spritzpulver von vorzüglicher Benetzbarkeit und Schwebefähigkeit. Aus solchen Spritzpulvern können durch Verdünnung mit Wasser Suspensionen von 0,1 – 8% Wirkstoff erhalten werden, die sich zur Unkrautbekämpfung in Pflanzenkulturen eignen.

Paste

Zur Herstellung einer 45%igen Paste werden folgende Stoffe verwendet:

| | |
|---|---|
| 45 Teile | 2-Nitro-5-(2'-chlor-4'-trifluormethyl-phenoxy)-phenyl-phenyl-phosphinsäuremethylester (Verb. Nr. 4) oder ein anderer Wirkstoff der Formel I, |
| 5 Teile | Natriumaluminiumsilikat, |
| 14 Teile | Cetylpolyglykoläther mit 8 Mol Äthylenoxid, |
| 1 Teil | Oleylpolyglykoläther mit 5 Mol Äthylenoxid, |
| 2 Teile | Spindelöl, |
| 10 Teile | Polyäthylenglykol, |
| 23 Teile | Wasser. |

Der Wirkstoff wird mit den Zuschlagstoffen in dazu geeigneten Geräten innig vermischt und vermahlen. Man erhält eine Paste, aus der sich durch Verdünnen mit Wasser Suspensionen jeder gewünschten Konzentration herstellen lassen.

Emulsionskonzentrat

Zur Herstellung eines 25%igen Emulsionskonzentrates werden

| | |
|---|---|
| 25 Teile | 2-Nitro-5-(2'-chlor-4'-trifluormethyl-phenoxy)-phenyl-methyl-phosphinsäure-n-butylester (Verb. Nr. 6) |
| 5 Teile | einer Mischung von Nonylphenolpolyoxyäthylen oder Calciumdodecylbenzolsulfat, |
| 15 Teile | Cyclohexanon, |
| 55 Teile | Xylol |

miteinander vermischt. Dieses Konzentrat kann mit Wasser zu Emulsionen auf geeignete Konzentration von z. B. 0,1 bis 10% verdünnt werden. Solche Emulsionen eignen sich zur Bekämpfung von Unkräutern in Kulturpflanzungen.

Zum Nachweis der Brauchbarkeit als Herbizide (pre- und post-emergent) dienen folgende Testmethoden:

Pre-emergente Herbizid-Wirkung (Keimhemmung)

Im Gewächshaus wird unmittelbar nach der Einsaat der Versuchspflanzen in Saatschalen die Erdoberfläche mit einer wässerigen Dispersion der Wirkstoffe, erhalten aus einem 25%igen Emulsionskonzentrat resp. aus einem 25%igen Spritzpulver von Wirkstoffen, die wegen ungenügender Löslichkeit nicht als Emulsionskonzentrat hergestellt werden können, behandelt. Es wurde eine Konzentration angewendet, welche 4 kg Wirksubstanz pro Hektar entspricht. Die Saatschalen werden im Gewächshaus bei 22—25° C und 50—70% rel. Luftfeuchtigkeit gehalten und der Versuch nach 3 Wochen ausgewertet und die Resultate nach folgenden Notenskala bonitiert:

1 = Pflanzen nicht gekeimt oder total abgestorben
2—3 = sehr starke Wirkung
4—6 = mittlere Wirkung
7—8 = geringe Wirkung
9 = keine Wirkung (wie unbehandelte Kontrolle)
— = Pflanze in entsprechender Wirkstoffkonzentration nicht geprüft.

Post-emergente Herbizid-Wirkung (Kontaktherbizid)

Eine größere Anzahl (mindestens 7) Unkräuter und Kulturpflanzen, sowohl monocotyle wie dicotyle, wurden nach dem Auflaufen (im 4- bis 6-Blattstadium) mit einer wässerigen Wirkstoffdispersion in einer Dosierung von 4 kg Wirksubstanz pro Hektar auf die Pflanze gespritzt und diese bei 24—25° C und 45—50% rel. Luftfeuchtigkeit gehalten. Mindestens 15 Tage nach Behandlung wird der Versuch ausgewertet und das Ergebnis wie im pre-emergent-Versuch nach derselben Notenskala bonitiert.

Die Ergebnisse, welche in diesen Versuchen mit den Verbindungen aus den Beispielen 1, 2, 3, 5 und 6 sowie den aus der DE-OS 2 619 841 bekannten Verbindungen 2-Nitro-5-chlorphenylphosphonsäure-diäthylester (A) und 2-Nitrophenyl-phosphonsäure-diäthylester (B) erhalten wurden, sind der folgenden Tabelle zusammengefaßt.

| | Verbindung Nr. 1 | 2 | 3 | 5 | 6 | A | B |
|---|---|---|---|---|---|---|---|
| Vorauflaufversuch 4 kg pro Hektar Pflanze | | | | | | | |
| avena fatua | 2 | 9 | 2 | 1 | 6 | 9 | 9 |
| sinapis alba | 1 | 1 | 1 | 1 | 1 | 9 | 9 |
| setaria italica | 2 | 2 | 1 | 1 | 3 | 9 | 9 |
| stellaria media | 1 | 7 | 1 | 1 | 1 | 9 | 9 |
| Nachauflaufversuch 4 kg pro Hektar Pflanze | | | | | | | |
| avena fatua | 4 | 4 | 1 | 2 | 5 | 8 | 4 |
| setaria italica | 2 | 1 | 1 | 3 | 4 | 6 | 4 |
| lolium perenne | 5 | 4 | 1 | 3 | 4 | 7 | 4 |
| solanum nigrum | 1 | 1 | 1 | 1 | 1 | 6 | 5 |
| sinapis alba | 1 | 1 | 1 | 1 | 1 | 5 | 5 |
| stellaria media | 2 | 2 | 1 | 2 | 2 | 6 | 7 |

Sowohl in pre- als im postemergenten Test zeigten die erfindungsgemäßen Verbindungen gute Unkrautwirkung auf monocotyle und dicotyle Unkräuter. Von den mitgeprüften Vergleichssubstanzen wies 2-Nitro-phenylphosphonsäurediäthylester ungenügende Noten von 5 bis 9 auf, während 2-Nitro-5-chlorphenylphosphonsäurediäthylester nur im post-emergenten Test schwache Herbizidwirkung zeigte.

**Patentansprüche**

1. Neue 2-substituierte 5-Phenoxy-phenyl-phosphinsäurederivate der Formel I

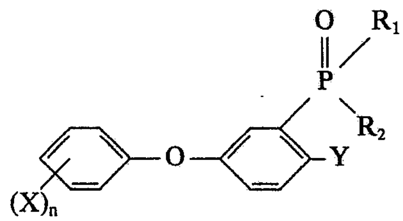

(I)

worin $R_1$ einen gegebenenfalls substituierten Alkyl- oder einen Arylrest, $R_2$ eine Hydroxylgruppe, nieder Alkoxy, Alkylthio, Alkylamino, Dialkylamino oder Chlor, X Halogen oder ein Gruppe $-CF_3$, $-NO_2$ oder $-CN$, n eine Zahl von Null bis 3, und Y eine der Gruppen $-NO_2$, $-NH_2$, $-OH$, $-CN$, oder Halogen darstellt.

2. Phosphinsäurederivate gemäß Patentanspruch 1, dadurch gekennzeichnet, daß in der Formel I n die Zahl 2 ist und die beiden Reste X in ortho- und para-Stellung im Phenoxyrest stehen und unabhängig voneinander je $-NO_2$, $-CN$, $-CF_3$ und Halogen, insbesondere Chlor bedeuten.

3. 5-(2'-Halogen-4'-trifluormethyl-phenoxy)-phenyl-phosphinsäurederivate gemäß Patentanspruch 2, von der Formel

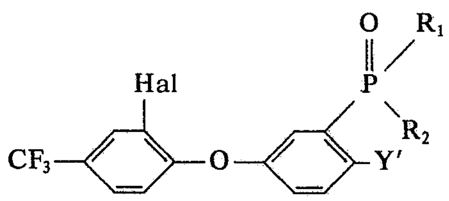

(IV)

worin Y' Halogen, die Nitro- oder Cyanogruppe bedeutet und $R_1$ und $R_2$ wie unter Formel I definiert sind.

4. Phosphinsäurederivate gemäß Patentanspruch 3, dadurch gekennzeichnet, daß Hal in der Formel IV ein Chloratom ist.

5. Phosphinsäurederivate gemäß Patentanspruch 3, dadurch gekennzeichnet, daß Y' in der Formel IV durch die Nitrogruppe verkörpert ist.

6. 2-Nitro-5-(2'-chlor-4'trifluormethyl-phenoxy)-phenyl-phosphinsäurederivate der Formel

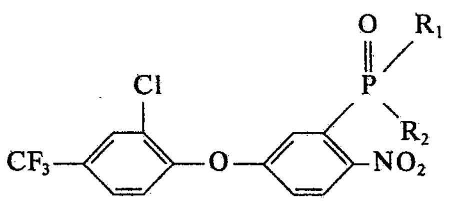

worin $R_1$ die Methyl-, Äthyl- oder Phenylgruppe und $R_2$ $C_1-C_4$ Alkoxyreste darstellen.

7. Die Verbindung 2-Nitro-5-(2'-chlor-4'-trifluormethyl-phenoxy)phenyl-methyl-phosphinsäureäthylester.

8. Die Verbindung 2-Nitro-5-(2'-chlor-4'-trifluormethyl-phenoxy)-phenyl-äthyl-phosphinsäuremethylester.

9. Verfahren zur Herstellung der 2-substituierten 5-Phenoxy-phenyl-phosphinsäurederivate der Formel I des Patentanspruchs 1, dadurch gekennzeichnet, daß man einen 3,4-Dinitro-diphenyläther der Formel II

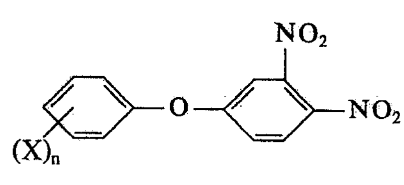

(II)

mit einem O,O-Dialkyl-alkyl- oder aryl-phosphonit $R_1-P(OR')_2$ umsetzt, worin R′ niedere Alkylreste und gegebenenfalls substituiertes $R_1$ Alkyl oder Aryl bedeuten, wobei unter Abspaltung eines Mols einer Verbindung $R'-O-N=O$ ein Alkylester einer 2-Nitro-5-phenoxy-phenylphosphinsäure der Formel III

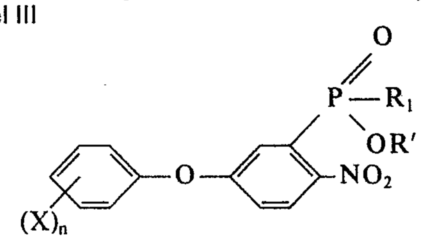

(III)

entsteht, und daß man gewünschtenfalls diesen Phosphinsäurealkylester in an sich bekannter Weise in die entsprechende freie Phosphinsäure oder in ein anderes Derivat dieser Säure gemäß der Definition für $R_2$ der Formel I überführt und/oder die 2ständige Nitrogruppe gewünschtenfalls in an sich bekannter Weise durch einen anderen Rest Y gemäß Definition unter Formel I ersetzt.

10. Herbizides und Pflanzenwachstum regulierendes Mittel, dadurch gekennzeichnet, daß es als aktive Komponente ein 2-substituiertes 5-Phenoxy-phenyl-phosphinsäurederivat der Formel I des Patentanspruchs 1 enthält.

11. Mittel gemäß Patentanspruch 10, dadurch gekennzeichnet, daß es als aktive Komponente eine 2-Nitro-5-(2′-chlor-5′-trifluormethylphenoxy)-phenyl-alkyl- oder aryl-phosphinsäure oder einen niederen Alkylester einer solchen Säure enthält.

12. Die Verwendung der neuen Phosphinsäurederivate der Formel I und der sie enthaltenden Mittel zur pre- und post-emergenten Unkrautbekämpfung in dicotylen und monocotylen Kulturpflanzenbeständen sowie zur Wachstumshemmung und Desiccation oberirdischer Pflanzenteile.

13. Die Verwendung der neuen Phosphinsäurederivate der Formel I und der sie enthaltenden Mittel zur post-emergenten totalen Vernichtung bestehenden Pflanzenwuchses zwecks Vorbereitung von Anbauflächen für die Einsaat neuer Kulturen ohne vorhergehendes Umpflügen.

14. Verwendung gemäß Anspruch 13 von Mitteln mit einem Gehalt an Wirkstoffen gemäß Patentanspruch 6.

**Claims**

1. A 2-substituted 5-phenoxy-phenylphosphinic acid derivative of the formula

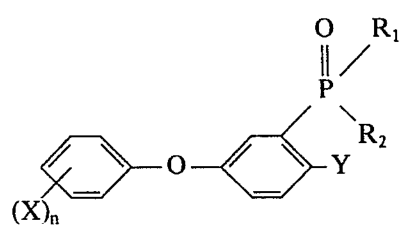

(I)

wherein $R_1$ is an unsubstituted or substituted alkyl or aryl radical, $R_2$ is a hydroxyl group, lower alkoxy, lower alkylthio, lower alkylamino, lower dialkylamino or chlorine, X is halogen or a member selected from the group consisting of $-CF_3$, $-NO_2$ or $-CN$, n is 0 to 3, and Y is a member selected from the group consisting of $-NO_2$, $-NH_2$, $-OH$, $-CN$, or is halogen.

2. A phosphinic acid derivative of the formula I according to claim 1, wherein n is 2 and both radicals X are in the ortho- and para-position of the phenoxy radical and each independently is selected from the group consisting of $-NO_2$, $-CN$, $-CF_3$ and halogen, in particular chlorine.

3. A 5-(2′-halo-4′trifluoromethylphenoxy)phenylphosphinic acid derivative according to claim 2, of the formula

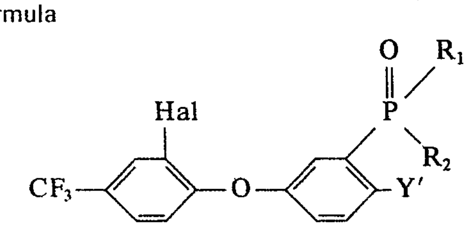

(IV)

wherein Y′ is halogen or the nitro or cyano group, and $R_1$ and $R_2$ are as defined for formula I.

4. A phosphinic acid derivative according to claim 3, wherein Hal in formula IV is a chlorine atom.

5. A phosphinic acid derivative according to claim 3, wherein Y′ in formula IV is the nitro group.

6. A 2-nitro-5-(2′-chloro-4′-trifluoromethylphenoxy)phenylphosphinic acid derivative of the formula

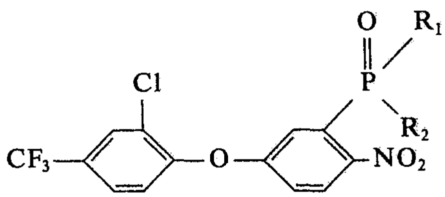

wherein $R_1$ is the methyl, ethyl or phenyl group and $R_2$ is $C_1-C_4$ alkoxy.

7. 2-Nitro-5-(2'-chloro-4'-trifluoromethylphenoxy)phenylmethylphosphinic acid ethyl ester.

8. 2-Nitro-5-(2'-chloro-4'-trifluoromethylphenoxy)phenylethylphosphinic acid methyl ester.

9. A process for the preparation of a 2-substituted 5-phenoxyphenylphosphinic acid derivative of the formula I according to claim 1, which process comprises reacting a 3,4-dinitrodiphenyl ether of the formula II

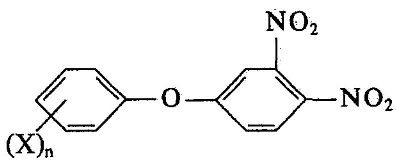

(II)

with a O,O-dialkylalkyl- or -arylphosphonate $R_1-P(OR')_2$, wherein R' is lower alkyl and $R_1$ is unsubstituted or substituted alkyl or aryl, to give an alkyl ester of a 2-nitro-5-phenoxyphenylphosphinic acid of the formula III

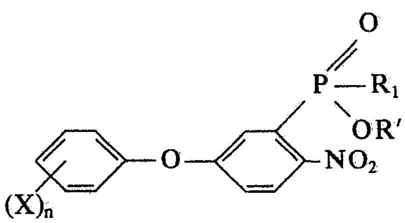

(III)

with the elimination of 1 mole of a compound $R'-O'N=0$, and, if desired, converting said phosphinic acid alkyl ester, in a manner known per se, into the corresponding free phosphinic acid or into another derivative thereof in accordance with the definition of $R_2$ in formula I, and/or, if desired, replacing the nitro group in the 2-position, in a manner known per se, by another radical Y as defined for formula I.

10. A herbicidal and plant growth regulating composition, wherein the active component is a 2-substituted 5-phenoxy-phenylphosphinic acid derivative of the formula I according to claim 1.

11. A composition according to claim 10, wherein the active component is a 2-nitro-5-(2'-chloro-5'-trifluoromethylphenoxy)phenylalkyl- or -arylphosphinic acid or a lower alkyl ester thereof.

12. A method of controlling weeds pre- and post-emergently in crops of dicot and monocot cultivated plants, as well as of inhibiting the growth of and desiccating parts of plants above the ground, which method comprises applying to the plant system a herbicidally effective amount of a novel phosphinic acid derivative of the formula I or of a composition containing such a compound.

13. A method of totally destroying existing plant growth postemergence in order to prepare a crop area for sowing new crops without prior ploughing, which method comprises applying to the plant system a herbicidally effective amount of a novel phosphinic acid derivative of the formula I or of a composition containing such a compound.

14. A method according to claim 13, which comprises the use of a composition containing a compound according to claim 6.

**Revendications**

1. Nouveaux dérivés d'acide 5-phénoxy-phényl-phosphinique substitués en position 2 de formule I

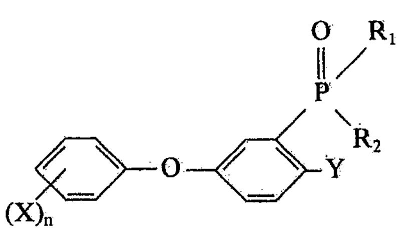

(I)

où $R_1$ représente un radical alcoyle ou un radical aryle éventuellement substitué, $R_2$ représente un groupe hydroxyle, un alcoxy inférieur, un alcoylthio, un alcoylamino, un dialcoylamino ou un chloro, X représente un halogène ou un groupe $-CF_3$, $-NO_2$ ou $-CN$, n représente un nombre allant de 0 à 3, et Y représente l'un des groupes $-NO_2$, $-NH_2$, $-OH$, $-CN$, ou un halogène.

2. Dérivés d'acide phosphinique selon la revendication 1, caractérisés en ce que dans la formule I n est le nombre 2 et en ce que les deux radicaux X sont en position ortho et para dans le radical phénoxy et représentent chacun indépendamment l'un de l'autre $-NO_2$, $-CN$, $-CF_3$ et un halogène, en particulier un chlore.

3. Dérivés d'acide 5-(2'-halogéno-4'-trifluorométhyl-phénoxy)-phényl-phosphinique selon la revendication 2, de formule

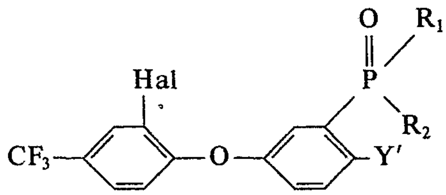

(IV)

où Y' représente un halogène, le groupe nitro ou cyano et $R_1$ et $R_2$ sont définis comme pour la formule I.

4. Dérivés d'acide phosphinique selon la revendication 3, caractérisés en ce que Hal dans la formule IV est un atome de chlore.

5. Dérivés d'acide phosphinique selon la revendication 3, caractérisés en ce que Y' dans la formule IV est représenté par le groupe nitro.

6. Dérivés d'acide 2-nitro-5-(2'-chloro-4'-trifluorométhyl-phénoxy)-phényl-phosphinique de formule

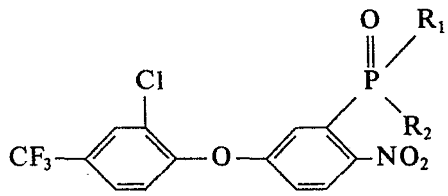

où $R_1$ représente le groupe méthyle, éthyle ou phényle et $R_2$ représente des radicaux alcoxy en $C_1$ à $C_4$.

7. Le composé ester éthylique de l'acide 2-nitro-5-(2'-chloro-4'-trifluorométhyl-phénoxy)-phényl-méthyl-phosphinique.

8. Le composé ester méthylique de l'acide 2-nitro-5-(2'-chloro-4'-trifluorométhyl-phénoxy)-phényl-éthylphosphinique.

9. Procédé de préparation des dérivés d'acide 5-phénoxy-phényl-phosphinique substitués en position 2 de formule I de la revendication 1, caractérisé en ce qu'on fait réagir un 3,4-dinitro-diphényléther de formule II

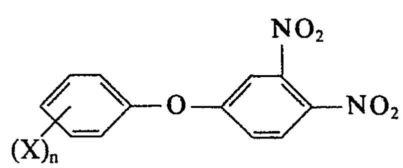

(II)

avec un O,O-dialcoyl-alcoyl- ou aryl-phosphonite $R_1-P(OR')_2$, où R' représente des radicaux alcoyle inférieur et $R_1$ représente un alcoyle ou un aryle éventuellement substitué, où avec séparation d'une mole d'un composé $R'-O-N=O$ il apparaît un alcoylester d'un acide 2-nitro-5-phénoxyphénylphosphinique de formule III

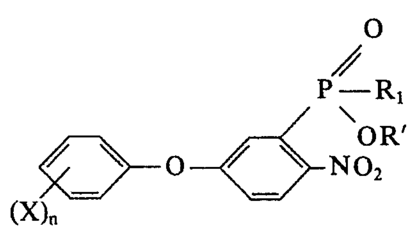

(III)

et en ce que si on le désire on transforme cet alcoylester d'acide phosphinique de façon classique en l'acide phosphinique libre correspondant en un autre dérivé de cet acide selon la définition de $R_2$ de la formule I et/ou en ce que si on le désire on remplace de façon classique le groupe nitro en position 2 par un autre radical Y selon la définition de la formule I.

10. Agent herbicide et de régulation de la croissance végétale, caractérisé en ce qu'il contient comme composant actif un dérivé d'acide 5-phénoxy-phényl-phosphinique substitué en position 2 de formule I de la revendication 1.

11. Agent selon la revendication 10, caractérisé en ce qu'il contient comme composant actif un acide 2-nitro-5-(2'-chloro-5'trifluorométhylphénoxy)-phényl-alcoyle ou aryl-phosphinique ou un ester d'alcoyle inférieur d'un tel acide.

12. Application des nouveaux dérivés d'acide phosphinique de formule I et des agents qui les contiennent à la lutte contre les mauvaises herbes en préet en post-levée dans les cultures dicotylédones et monocotylédones, ainsi qu'à l'inhibition de la croissance et à la dessication des parties sériennes des plantes.

13. Application des nouveaux dérivés d'acide phosphinique de formule I et des agents qui les contiennent à l'anéantissement total en post-levée de la croissance végétale existante afin de préparer les surfaces cultivées pour semer de nouvelles cultures sans les retourner au préalable.

14. Application selon la revendication 13 d'agents ayant une teneur en matières actives selon la revendication 6.